# EUROPEAN PATENT APPLICATION

(11) **EP 4 840 756 A1**
(43) Date of publication of application: **18.11.2026**
(21) Application number: 25176770.3
(22) Date of filing: 15.05.2025
(51) Int. Cl.: B64C 1/18, B64D 11/06

(54) **MOUNTING RAIL ARRANGEMENT FOR AN AIRCRAFT CABIN FLOOR**

(71) Applicant: AIRBUS Operations GmbH, 21129 Hamburg (DE)
(72) Inventor: Bortolotti Rossini, Mayara, 21129 Hamburg (DE); Benthien, Hermann, 21129 Hamburg (DE); Schwing, Bernd, 21129 Hamburg (DE)
(74) Representative: Airbus Germany

(57) **Abstract**

The present invention relates to a mounting rail arrangement for an aircraft cabin floor. **In** order to provide a cabin floor that offers improved adaptability, a mounting rail arrangement (10) for an aircraft cabin floor is provided hat comprises a support rail (12) for a horizontal extension, the support rail having an upper web (14) and a first lateral web (16) and a second lateral web (18) extending from each lateral edge of the upper web in a downward direction; a reinforcement arrangement (20) on a lower side of the upper web; and a plurality of mounting interfaces (22) inserted along vertical mounting axes (24) into openings (26) in the upper web. The mounting interfaces are configured for an insertion of a mounting element (30). The mounting interfaces are connected with the reinforcement arrangement in a form-fit manner i) in a direction along the mounting axis, and ii) in a rotation around the mounting axis. A rotational fixation in relation to the mounting axes is provided for the reinforcement arrangement by two or more connections of the mounting interfaces.

## Description

### FIELD OF THE INVENTION

The present invention relates to mounts in a cabin floor; the present invention relates in particular to a mounting rail arrangement for an aircraft cabin floor, to an aircraft cabin floor, to an aircraft and to a method for load introduction into an aircraft cabin floor

### BACKGROUND OF THE INVENTION

In commercial aircrafts, like passenger aircrafts, a cabin floor is arranged within the fuselage. Basically, horizontally running beams act as support for floor panels. But besides carrying floor panels, the cabin floor is also arranged for mounting of passenger seats, monuments and lavatories inside the cabin. As an example, for mounting seats in varying arrangements, e.g. with different seat pitches, seat rails are provided in the cabin floor. As a further example, lavatories are mounted to the floor construction, e.g. by special brackets. The demand for a flexible use of the cabin constantly increases, including scenarios like changing seats and modules on a short-term note. However, it has been shown that existing solutions may be cumbersome to implement the required changes.

### SUMMARY OF THE INVENTION

There may thus be a need to provide a cabin floor that offers improved adaptability.

The object of the present invention is solved by the subject-matter of the independent claims; further embodiments are incorporated in the dependent claims. It should be noted that the following described aspects of the invention apply also for the mounting rail arrangement for an aircraft cabin floor, for the aircraft cabin floor, for the aircraft and for the method for load introduction into an aircraft cabin floor.

According to the present invention, a mounting rail arrangement for an aircraft cabin floor is provided. The mounting rail arrangement comprises a support rail for a horizontal extension, the support rail having an upper web and a first lateral web and a second lateral web extending from each lateral edge of the upper web in a downward direction. The mounting rail arrangement comprises a reinforcement arrangement on a lower side of the upper web and a plurality of mounting interfaces inserted along vertical mounting axes into openings in the upper web. The mounting interfaces are configured for an insertion of a mounting element. The mounting interfaces are connected with the reinforcement arrangement in a form-fit manner i) in a direction along the mounting axis, and ii) in a rotation around the mounting axis. A rotational fixation is provided in relation to the mounting axes for the reinforcement arrangement by two or more connections of the mounting interfaces.

As an effect, a light floor design is provided which is yet having improved load carrying capabilities. The reinforcement improves the load carrying characteristic, in particular for pulling forces, while the rotational fixation ensures a reliable connection of the mounted parts. This allows a facilitated implementation of changes. As an advantage, a cabin floor with increased adaptability is provided.

According to an example, the reinforcement arrangement provides a load transfer area to the support rail which is larger than a load transfer surface of the mounting interfaces.

As an advantage, an improved load transfer is arranged, allowing larger forces with a lighter construction.

According to an example, the reinforcement arrangement comprises a plurality of reinforcement plates arranged along the lower side of the upper web. For the rotational fixation, adjacent reinforcement plates block each other in terms of rotation around the mounting axis by a form-fit connection.

By arranging the plates in a mutual blocking manner, each connection point itself does not need to by rotationally fixed. By the simple addition of two or more plates, the rotation clamping of each mounting interface is provided.

According to an example, the reinforcement plates have a polygonal outer shape with a plurality of abutment portions to abut on adjacent abutment portions of an adjacent reinforcement plate.

This allows an even lighter design with a reduced assembly effort.

According to an example, the reinforcement arrangement comprises a reinforcement strip arranged along the lower side of the upper web. The reinforcement strip comprises an engagement profile on its lower side and the mounting interfaces are configured to engage with the engagement profile. The engagement profile comprises i) at least one linear toothlike protrusion; or ii) a linear recess along at least a part of the reinforcement strip.

The strip-like reinforcement element provides advantages during assembly, since only one piece needs to be handled compared to handling a plurality of the plates.

According to an example, a sealing arrangement is provided between the mounting interfaces and the support rail.

The sealing supports the approach to provide a floor that is tight for e.g. liquids and dust. The sealing avoids entry of e.g. spilled beverages into the floor support construction.

According to an example, the mounting interfaces comprise an upper section for connection of a shear pin segment of a mounting element and a lower section with a thread for an engagement of a threaded pin segment.

The mounting interfaces can thus be realized by respective multifunctional parts.

According to an example, the upper web comprises a curved cross-section at least in a center area providing a concave curved lower abutment contour for the reinforcement arrangement. The reinforcement arrangement comprises a convex curved upper contour for engagement with the concave curved lower abutment contour of the support rail.

The curved web segment provides improved rigidity, while still being of lightweight design. The concave/convex abutment is a robust and easy to make and easy to produce form-fit engagement.

According to an example, the support rail comprises upper resting surfaces for mounting of floor panels.

The support rail can thus carry not only loads from seats and monuments, but also from the floor in general. The upper resting surfaces form the basis for an improved, i.e. facilitated floor panel mount.

According to an example, a longitudinal cover plate is arranged above the upper web. The cover plate is connected to the mounting interfaces. The cover plate comprises lateral clamping sections protruding from its lower side for clamping engagement with floor panels.

Thus, a floor mounting system is provided. As an example, the cover plate fulfils the function of closing a gap between floor panels. The cover plate also fulfils the function of holding the floor panels. As a result, a system with a minimum number of parts is provided.

According to an example, the mounting elements comprise seat mounting parts that are mounted to the mounting interfaces and that have an upper head section, which is extending upwards from above the support rail. The upper head section provides a single nose rail segment for connection of a seat leg.

While seat rails allow a seat mount along their length in the graduation of the pattern's pitch, e.g. an inch-wise setting, this also means that seat mount interface option is required along the length. By providing a seat mounting part according to the present solution, the seat mount interface is only created where it will be needed, but not along the complete support rail. It is noted that the support rail is equipped with the option to be transformed into a seat mount interface along the length, but so-to-speak only prepared to be transformed.

According to an example, the support rail is made at least partly from a fiber matrix composite material.

This allows to provide a weight-optimized structure.

According to the present invention, also an aircraft cabin floor is provided. The aircraft cabin floor comprises a plurality of floor panels and a plurality of mounting rails. At least a part of the plurality of the mounting rails is provided as the mounting rail arrangement according to one of the preceding examples. At least a part of the floor panels is attached to the support rails of the mounting rail arrangements.

According to the present invention, also an aircraft is provided. The aircraft comprises a fuselage structure enclosing a fuselage volume and an aircraft cabin floor according to the example above arranged within the fuselage separating an upper cabin area from a lower cargo space in the fuselage volume. At least one of the group comprising passenger seat arrangements, monuments and lavatories is mounted to the mounting interfaces of the aircraft cabin floor.

According to the present invention, also a method for load introduction into an aircraft cabin floor is provided. The method comprises the following steps:
- Arranging a support rail of an aircraft floor running in a horizontal extension, the support rail having an upper web and a first lateral web and a second lateral web extending from each lateral edge of the upper web in a downward direction;
- Providing a reinforcement arrangement on a lower side of the upper web;
- Inserting a plurality of mounting interfaces along vertical mounting axes into openings in the upper web; the mounting interfaces are connected with the reinforcement arrangement in a form-fit manner i) in a direction along the mounting axis, and ii) in a rotation around the mounting axis; and a rotational fixation in relation to the mounting axes is provided for the reinforcement arrangement by two or more connections of the mounting interfaces;
- Insertion of at least one mounting element into one of the mounting interfaces;
- Connecting a load carrying member to the mounting element; and
- Providing a load path from the load carrying member to the support rail via the mounting interfaces and the reinforcement arrangement.

According to an aspect, a support rail is equipped with a plurality of connection interfaces that are provided together with a reinforcing structure. The reinforcement provides a fixation against rotation in a form-fit-manner. This results in a reliable and improved load transfer. The mounting elements are connected to the connection interfaces. These transfer the load, i.e. the acting forces, to the reinforcement structure which on the other hand transfers the load, i.e. the acting forces, into the support rail. Thus, a two-step load transfer is provided. This allows an increase of the effective load transferring surface areas. The improvement is provided by the reinforcement in two ways: first, the load transfer area is increased, and second, the rotation locking of the connection interfaces to the reinforcement by a form-fit engagement is important e.g. for higher pulling forces.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a mounting rail arrangement for an aircraft cabin floor in a cross-section.
Fig. 2 shows an example of an aircraft cabin floor in a vertical cross-section.
Fig. 3 shows an example of an aircraft in a cross-section.
Fig. 4a schematically shows another example of the mounting rail arrangement in a cross-section.
Fig. 4b shows the example the mounting rail arrangement of Fig. 4a in a cross-section in length direction of the rail.
Fig. 4c shows the mounting interfaces of Fig. 4b in a view from below.
Fig. 5 shows an example of the mounting interface in a cross-sectional view.
Fig. 6 schematically shows a further example of the mounting rail arrangement in a cross-section.
Fig. 7a, Fig. 7b, Fig. 7c and Fig. 7d show steps of an example of a manufacturing procedure.
Fig. 7e and Fig. 7f show variations of the mounting interface.
Fig. 8a, Fig. 8b, Fig. 8c and Fig. 8d show steps of another example of a manufacturing procedure.
Fig. 8e shows a variation of the mounting interface.
Fig. 9a, Fig. 9b and Fig. 9c show steps of a further example of a manufacturing procedure.
Fig. 9d and Fig. 9e show a variation of the mounting interface.
Fig. 10a shows another example of the mounting rail arrangement in a cross-section. The support rail has an upper web comprising a curved cross-section. A cover plate is provided clamping adjoining floor plates.
Fig. 10b shows an example of the mounting rail arrangement of Fig. 10a with the mounting elements comprising seat mounting parts that have an upper head section, which is extending upwards from above the support rail. The upper head section provides a single nose rail segment for connection of a seat leg.
Fig. 11 shows basic steps of an example of a method for load introduction into an aircraft cabin floor.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

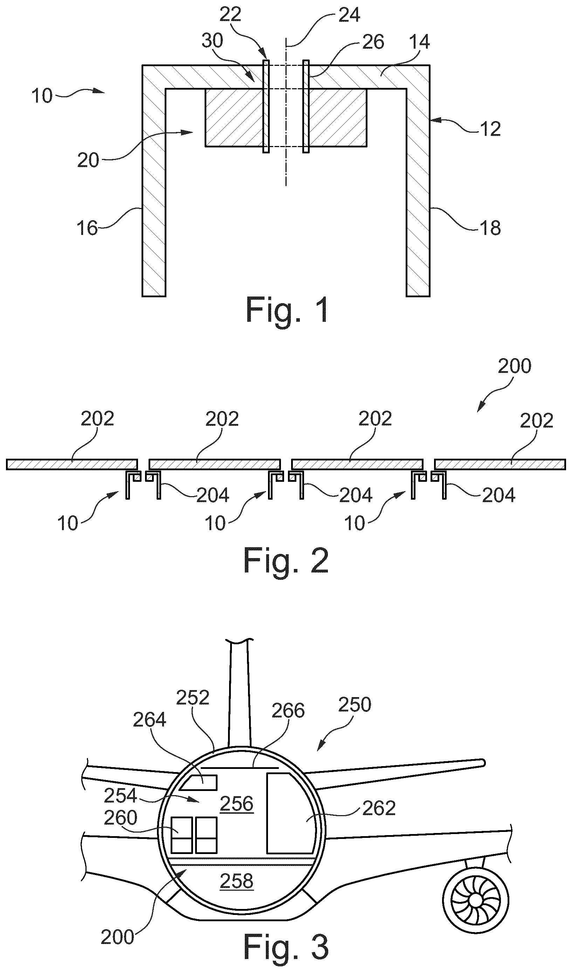

Fig. 1 schematically shows an example of a mounting rail arrangement 10 for an aircraft cabin floor in a cross-section. The mounting rail arrangement 10 comprises a support rail 12 for a horizontal extension. The support rail 12 has an upper web 14 and a first lateral web 16 and a second lateral web 18 extending from each lateral edge of the upper web 14 in a downward direction. The mounting rail arrangement 10 further comprises a reinforcement arrangement 20 on a lower side of the upper web 14. The mounting rail arrangement 10 also comprises a plurality of mounting interfaces 22 inserted along vertical mounting axes 24 into openings 26 in the upper web 14. The mounting interfaces 22 are configured for an insertion of a mounting element 28 (not shown in Fig. 1). The mounting interfaces 22 are connected with the reinforcement arrangement 20 in a form-fit manner i) in a direction along the mounting axis, and ii) in a rotation around the mounting axis. A rotational fixation 30 in relation to the mounting axes 24 is provided for the reinforcement arrangement 20 by two or more connections of the mounting interfaces 22.

The term "mounting rail arrangement" relates to a sub-system of the cabin floor, which is not just a floor surface, but a rather complex system of holding parts, covering parts, load transmitting parts and other components. The mounting rail arrangement 10 provides a mounting function along a support bar, i.e. a linear mounting sub-systems. Of course, several of the mounting rail arrangements 10 can be arranged within the aircraft cabin floor. The mounting rail arrangement 10 can also be referred to as support rail arrangement, support arrangement or support system.

The term "support rail" relates to a bar member that is provided for load carrying purposes. The bar member has a longitudinal, i.e. basically linear extension, hence the term "rail". The support rail 12 is provided to carry loads like weight loads from e.g. seats, monuments, storage compartments and lavatories. The support rail 12 can be referred to as support beam, floor rail or floor support. The support rail 12 can also be referred to as support profile.

In an example, the support rail 12 is basically having a U-shaped cross-section, but the "U" being positioned upside down.

In another example, the support rail 12 is having a C-shaped cross-section, but the "C" being positioned sidewards such that the center part of the C is facing upwards and the two arms of the C are pointing downwards.

In a further example, the support rail 12 is having an omega-shaped cross-section.

In a still further example, the support rail 12 is having a hat-shaped cross-section.

The term "reinforcement arrangement" relates to an additional constructive measure provided for improving the support rail regarding the mounting capabilities. The reinforcement arrangement 20 can also be referred to as reinforcement structure.

The term "mounting interface" relates to a mechanical interface provided for mounting purposes. The mounting interface 22 provides a suitable connection for the mounting element. The mounting interface 22 is arranged having a shape, size, contour or profile matching with a respectively designed mounting element.

The upper web 14 of the rail 12 is a central segment of the load carrying profile provided by the rail 12. The upper web 14 of the rail can also be referred to as upper web section, upper section or upper profile section. The two lateral webs 16, 18 of the rail 12 are the lateral load carrying segments of the load carrying profile provided by the rail 12. The two lateral webs 16, 18 of the rail 12 can also be referred to as lateral web sections, lateral sections or lateral profile sections.

By connecting the mounting interfaces 22 to the reinforcement arrangement 20 in a form-fit manner against rotation, the mounting interfaces 22 are rotationally fixed, which addresses the criteria of "torque"-proof interfaces. The connection of the mounting interfaces 22 to the support rail 12 thus do not need to be torque-proof, since this is fulfilled by the form-fit connection with the reinforcement arrangement 20. The reinforcement arrangement 20 provides improved capacities in terms of rotation fixation.

By connecting the mounting interfaces 22 to the reinforcement arrangement 20 in a form-fit manner along the mounting axis 24, the mounting interfaces 22 are additionally fixed in particular in upwards pulling direction, which addresses the criteria of "pull through"-proof interfaces. The reinforcement arrangement 20 also provides improved capacities in terms of pulling forces acting in a vertical upwards direction.

The so-called pull-through resistance provided by the reinforcement arrangement 20 is in particular useful when the rail is a continuous fiber-reinforced polymer (FRP) rail.

In a further example, the rail 12 is made from, or comprises, a composite fiber reinforced plastic (CFRP).

In a further example, the rail 12 is made from or comprises thermoplastic carbon fiber reinforced polymer or a thermoplastic matrix.

The reinforcement arrangement 20 increases the load transfer area and thus optimizes the load path to the supporting webs of the support rail 12, i.e. the first and second lateral webs 16, 18 of the support rail 12.

The mounting element 30 can be a pin, a screw, a bolt or the like.

In an example, the plurality of mounting interfaces 22 provides a standard interface for screws and shear pins.

The anti-rotation feature at the fitting attachment to the seat rail avoids an unwanted release at the interface.

As an advantage, cabin modifications are facilitated, since a plurality of connection points is provided along the rail that are suitable for different purposes comprising seat mounts, monument fixations or lavatory mounts. The plurality of connection points thus provides a stepless introduction of monuments on seat rail as standard interface for seats and monuments.

In an example, the mounting rail arrangement 10 comprises a plurality of the mounting elements.

In an example, the openings 26 in the upper web 14 are provided in an inch wise hole pattern.

Fig. 2 shows an example of an aircraft cabin floor 200 in a vertical cross-section. The aircraft cabin floor 200 comprises a plurality of floor panels 202 and a plurality of mounting rails 204. At least a part of the plurality of the mounting rails 204 is provided as an example of the mounting rail arrangement 10 according to one of the preceding examples. At least a part of the floor panels 202 is attached to the support rails 12 of the mounting rail arrangements 10.

The aircraft cabin floor 200 can also be referred to as aircraft cabin floor system.

Fig. 3 shows an example of an aircraft 250 in a cross-section. The aircraft 250 comprises a fuselage structure 252 enclosing a fuselage volume 254. The aircraft 250 also comprises an example of the aircraft cabin floor 200 according to the example above. The aircraft cabin floor 200 is arranged within the fuselage 252 separating an upper cabin area 256 from a lower cargo space 258 in the fuselage volume 254. At least one of the group comprising passenger seat arrangements, monuments and lavatories is mounted to the mounting interfaces of the aircraft cabin floor. As an example, seats 260 are indicated as well as a monument or lavatory 262. **In** addition, also overhead compartments 264 and inner cabin lining panels such as a center ceiling panel 266 are schematically shown.

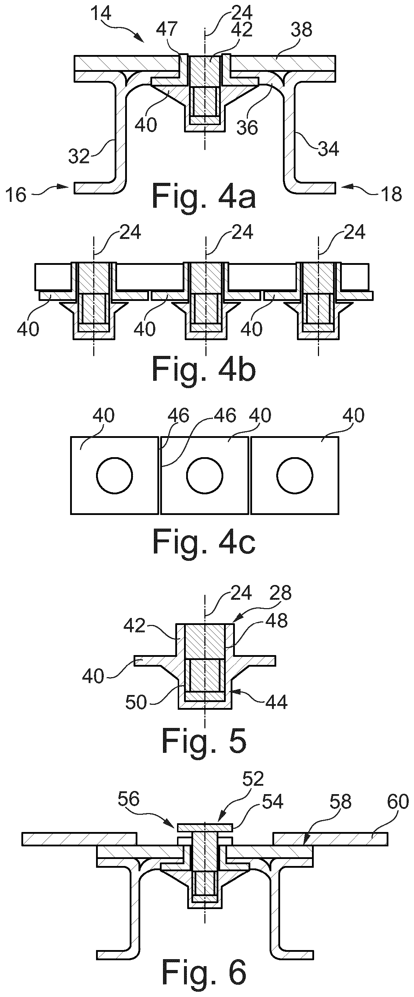

Fig. 4a schematically shows another example of the mounting rail arrangement 10 in a cross-section. The support rail 12 is provided as two lateral C-segments 32, 34 that are facing away from each other with their open side. The C-segments 32, 34 thus provide the two lateral webs 16, 18. A connecting or bridging central segment 36, such as a C-segment facing downwards with its open side, is provided as the upper web 14. As an option, an upper additional web segment 38 is provided.

According to an option, the reinforcement arrangement 20 provides a load transfer area to the support rail 12 which is larger than a load transfer surface of the mounting interfaces 22.

The term "load transfer area" relates to an area for transferring load from the reinforcement arrangement to the support rail 12. For example, when a pulling or pushing force acts on the mounting interface 22, the pulling or pushing force is transferred to the support rail 12, which transfers the load into the fuselage structure, thereby providing the respective holding force. The load transfer area is the area in which the two parts abut and where load can be transmitted.

As an option, the reinforcement arrangement 20 comprises a plurality of reinforcement plates 40 arranged along the lower side of the upper web 14. For the rotational fixation, adjacent of the reinforcement plates 40 block each other in terms of rotation around the mounting axis 24 by a form-fit connection.

The term "reinforcement plates" relates to individual constructive elements that have a plate-like shape and that act as reinforcement. The term "block each other" relates to a mutual fixation against rotation, whereas a single plate would not fixate itself against rotation. The adjacent reinforcement plates 40 form a mutual rotation locking arrangement.

The mounting interfaces 22 can be provided having a cylindrical bushing inserted into the opening 26 an extending towards the lower side with a distal portion 44.

Fig. 4b shows the example the mounting rail arrangement 10 of Fig. 4a in a cross-section in length direction of the rail 12. As can be seen, adjacent reinforcement plates 40 abut each other such that they are blocking any rotational movement around the mounting axes 24.

Fig. 4c shows the mounting interfaces of Fig. 4b in a view from below. As an option, the reinforcement plates 40 have a square shape. The lateral end faces towards the respective neighboring plate form abutment portions 46 to abut on adjacent abutment portions of an adjacent reinforcement plate 40.

As another option, the reinforcement plates 40 have a polygonal outer shape with a plurality of the abutment portions to abut on adjacent abutment portions of an adjacent reinforcement plate 40.

The term "abutment portions" relates to parts that abut with counterparts to enable a blocking function thus preventing rotation.

In an example, the adjacent reinforcement plates 40 have a rectangular shape, e.g. a square shape.

In another example, the adjacent reinforcement plates 40 have a hexagonal or octagonal shape.

In a further example, the adjacent reinforcement plates 40 have radially extending arms, which provide the abutment portions at their distal ends.

In Fig. 4a, as an option, a sealing arrangement 47 is provided between the mounting interfaces 22 and the support rail 12.

The term "sealing arrangement" relates to a sealing against e.g. liquids, humidity, dust and other debris.

In an example, the sealing arrangement 47 comprises a plurality of seals that have a flange- or washer-like horizontal extension to be arranged between the lower side of the support rail 12 and an upper side of the abutting face of the mounting interface 22, and a vertical tube-like extension to be arranged between the inner side walls of the openings in the upper web and the outer side of the mounting interface 22.

The sealing arrangement 47 supports a gas tightness of the floor construction. While floor panels are rather easy to be arranged as gas-tight along their even surface, connection aeras such as the support rails have a higher complexity in their geometry.

Fig. 5 shows an example of the mounting interface 22 in a cross-sectional view.

In Fig. 5, as an option it is provided that the mounting interfaces 22 comprise an upper section 48 for connection of a shear pin segment of a mounting element and a lower section 50 with a thread for an engagement of a threaded pin segment.

Fig. 6 schematically shows a further example of the mounting rail arrangement 10 in a cross-section.

In Fig. 6, it is shown as an option that the mounting elements 30 comprise seat mounting parts 52 that are mounted to the mounting interfaces 22 and that have an upper head section 54, which is extending upwards from above the support rail 12. The upper head section 54 provides a single nose rail segment 56 for connection of a seat leg.

As an option, the seat mounting parts 52 are bolt-like fasteners that can be screwed into the mounting interfaces 22 via threads or inserted like a pin.

The term "seat mounting parts" relates to interfaces that are configured for mounting of seats. The seat mounting parts are therefore insertable seat holding interfaces. A seat leg can then be fixed to the respective seat mounting part. If not needed, the seat mounting parts can be de-mounted. Instead of a permanent seat rail, individual mounting points can be installed.

The support rail 12 is thus at least partly transformable into a seat rail that is configured to provide a mounting interface for passenger seat arrangements of the aircraft cabin at a plurality of different locations along the seat rail 12.

In Fig. 6, it is shown as an option that the support rail 12 comprises upper resting surfaces 58 for mounting of floor panels 60, which are shown as an option and also for better understanding.

The term "upper resting surfaces" relates to support surfaces to carry the floor plates or panels.

The term "floor panel" relates to the constructive floor members having panel-like forms and character.

The mounting rail arrangement provides a continuous interface for floor panels.

In an option, the support rail comprises upper lateral web extensions providing the resting surfaces. This allows to keep the reduce or even avoid a load entry of X- and Y-forces (acting in a horizontal direction, e.g. of the floor extension) into the upper web segment.

In an example, two C-shaped lateral profiles, both open facing away from each other, are combined with a U-shaped central profile, open facing downwards. The U-shaped central profile provides the upper web. In a first variation, the first and second lateral webs are provided by the U-shaped central profile as well. In a second variation, the first and second lateral webs are provided by the U-shaped central profile and the vertical web, i.e. the central web, of the C-shaped lateral profiles. In a third variation, the first and second lateral webs are provided by the vertical web of the C-shaped lateral profiles.

In an option, the support rail 12 is made by attaching two C-shaped lateral profiles to the U-shaped central profile.

In another option, the support rail 12 is made by extruding a respective integrated profile combining the two lateral C-shapes and the U-shape in between.

In an example, the support rail 12 is made from a single material.

For example, the support rail 12 is made from metal, such as titanium, steel, aluminum or an alloy.

For example, the support rail 12 is made from a fiber reinforced composite plastic material.

In another example, the support 12 rail is a hybrid rail made from different materials.

In one option, for example, the lateral web segments like the C-shaped profiles are made from metal, such as titanium or steel or an alloy, and the center web segments, like the U-shaped profile, are made from a fiber reinforced composite plastic material. For example, the center profile is a thermoplastic profile having an Omega shape with edges conforming with lower faces of the lower ends of the C-shaped profiles.

In another option, for example, the lateral web segments 16, 18 like the C-shaped profiles are made from a fiber reinforced composite plastic material, and the center web 14 segment like the U-shaped profile is made from metal, such as titanium or steel, or an alloy.

In an option, the support rail 12 is made at least partly from a fiber matrix composite material.

In an option, the support rail 12 is partly made from fiber matrix composite material and partly from metal or a metal alloy material.

In another option, the support rail 12 is made completely from fiber matrix composite material.

In an example, the fiber matrix composite material is a fiber-reinforced polymer (FRP), or a composite fiber reinforced plastic (CFRP).

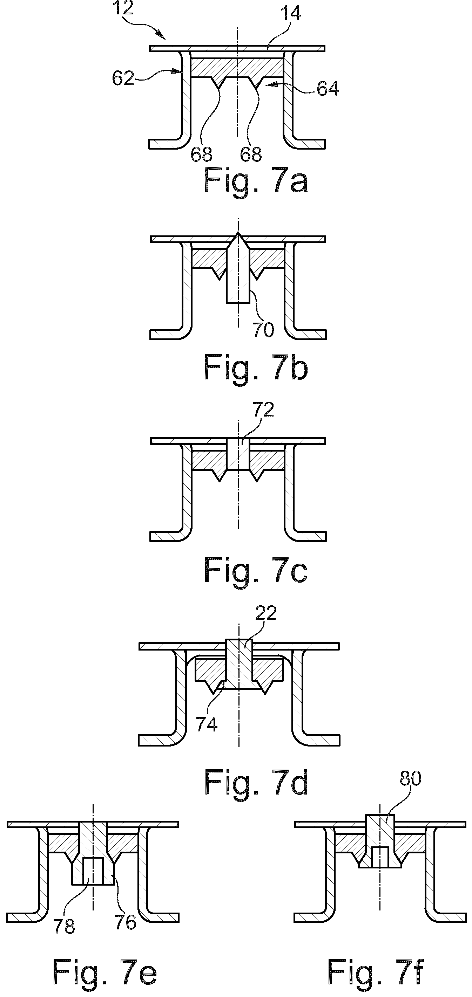

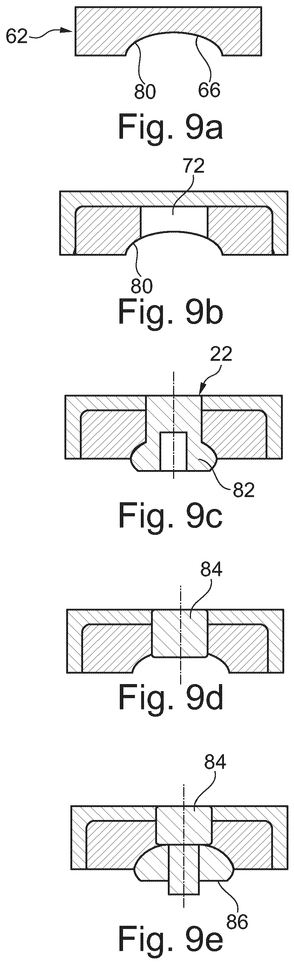

In an option, shown in Fig. 7a-f and Fig. 8a-e, and Fig. 9a-e, the reinforcement arrangement 20 comprises a reinforcement strip 62 arranged along the lower side of the upper web 14. The reinforcement strip 62 comprises an engagement profile on its lower side and the mounting interfaces 22 are configured to engage with the engagement profile. The engagement profile also comprises i) at least one linear toothlike protrusion 64, or ii) a linear recess 66 (see Fig. 9a following) along at least a part of the reinforcement strip.

The term "reinforcement strip" relates to strip-like, i.e. linear single member, contrary to a plurality of individual elements like the reinforcement plates 40.

The term "toothlike protrusion" relates to a protrusion on one side that has a form like a tooth, protruding in more or less vertical manner in relation to the surface.

The term "linear recess" relates to a longitudinally extending recess in the surface, e.g. a groove.

The reinforcement strip can be attached, for example, by gluing, welding or clamping. In another example, the reinforcement strip is attached to the support rail during an autoclave process.

In case of the at least one linear toothlike protrusion, the mounting interfaces engage with the at least one toothlike protrusion 64.

In a first variation, the mounting interfaces 22 comprise a radially protruding collar on their lower end, and wherein the collar is engaging with the at least one linear toothlike protrusion 64 to provide the rotational fixation.

In an option, the reinforcement strip 62 is blocked in terms of rotation around the mounting axis by a form-fit connection of at least two of the mounting interfaces 22.

In another option, the reinforcement strip 62 is blocked by at least one of the first lateral web 16 and the second lateral web 18.

In a first option, for the engagement of the collar with the reinforcement strip 62, two of the linear protrusions are provided, and the collar of the mounting interface is polygonal, e.g. square, rectangular, hexagonal or octagonal, to abut against the protrusions on their sides, i.e. their facing flanks.

In a second option, for the engagement of the collar with the reinforcement strip 62, one linear protrusion is provided, and the collar of the mounting interface is made from a material that is deformable to be brought into engagement with the protrusion when urged and pressed onto the protrusion. In an example, the collar is provided with a radial slit to engage with the protrusion. As an example, the protrusion is arranged centered, and the openings are provided by drilling such that the protrusion is also machined by drilling to provide two protrusion portions on two opposing sides of the opening.

In a second variation, the mounting interfaces 22 comprise a bushing segment for sticking out of the reinforcement arrangement 20. The bushing segment has outer wall surfaces that are configured to engage with the at least one linear toothlike protrusion to provide the rotational fixation. As an example, the bushing segments are pressed, shrunken or welded with the reinforcement arrangement.

In case of the linear recess, the mounting interfaces 22 engage with the recess 66.

In a first option, the recess 66 is a rounded groove, and the mounting interfaces 22 have a rounded contour to abut to the reinforcement arrangement 20 and to engage with the groove against rotation.

In a second option, the recess 66 is a polygonal-shaped groove, and the mounting interfaces have a contour with at least one abutment surface to abut to the reinforcement arrangement for engaging against rotation.

In a further option, the mounting interfaces 22 comprise a bushing resting inside the opening of the upper web and the through-hole in the reinforcement arrangement 20. Further, a form fit nut is provided for connection with a bolt acting as the mounting element 28. The form fit nut rests within the recess and thus abuts to the reinforcement arrangement 20 for the rotation fixation.

Fig. 7a shows an initial state, in which the reinforcement strip 62 is arranged within the support rail 12. The reinforcement strip 62 has two protruding dent-shape ribs 68.

In an option, the reinforcement strip 62 has only one protruding dent-shape rib, e.g. laterally displaced or centered.

Fig. 7b shows the next step in which a hole pattern is drilled along a centerline with a tool 70, for example in an inch-wise pattern.

Fig. 7c shows an intermediate result with through-holes 72 reaching through the reinforcement strip 62 and the support rail's upper web segment 14.

Fig. 7d shows the insertion of the bushing like mounting interface 22 that connects the upper web segment 14 with the reinforcement strip 62. The mounting interface 22 has a collar 74 for connecting with the reinforcement strip 62. The collar 74 engages with at least one of the two ribs 68 and is thereby locked against rotation.

Fig. 7e shows a variation of the mounting interface 22 which has a lower segment 76 extending beyond the reinforcement strip 62. For example, an inner thread 78 is provided in the extending segment. For a rotational locking, outer parts of the lower segment engage with at least one of the two ribs 68.

Fig. 7f shows a further variation of the mounting interface 22 which has a smaller lower segment 80 extending beyond the reinforcement strip 62. For example, a shorter inner thread is provided in the extending segment. For a rotational locking, outer parts of the lower segment engage with at least one of the two ribs 68.

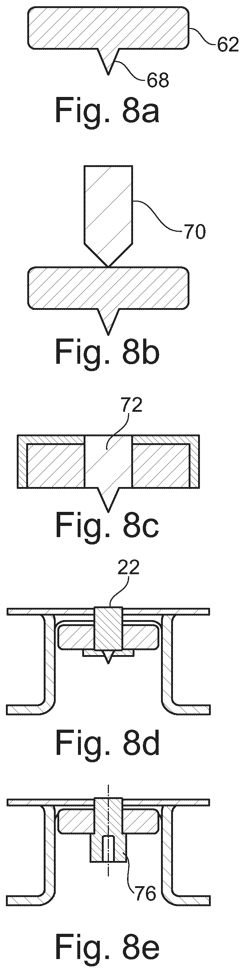

Fig. 8a shows an initial state of another example of the reinforcement strip 62. Instead of two ribs, one central rib or dent is provided. For visualization only, the further support rail 12 is not shown.

Fig. 8b shows the drilling of the hole pattern.

Fig. 8c shows the resulting through-hole.

Fig. 8d shows the inserted mounting interface 22. The mounting interface 22 engages with the rib 68.

Fig. 8e shows a variation of the mounting interface 22 with the lower segment 76 extending beyond the reinforcement strip 62.

Fig. 9a shows an initial state of a further example of the reinforcement strip 62. Instead of one or two ribs, the linear recess 66 is provided. For visualization only, the further support rail 12 is not shown.

As an example, the recess 66 is provided as a concave-shaped recess with a curved cross-section 80.

Fig. 9b shows the hole pattern with through-holes as a result of e.g. the drilling process.

Fig. 9c shows the inserted mounting interface 22. For an engagement with the reinforcement strip 62 and a locking against rotation, the mounting interface 22 is provided with a matching collar 82 that has a curved profile to engage with the longitudinal recess.

In Fig. 9d and Fig. 9e, a variation is shown in which the mounting interface 22 is provided in two parts. A smaller part 84 is inserted like a bushing in all through-holes (see Fig. 9d). Where the mounting interface 22 is used for connection, a second, locking part 86 is added, resulting in the engagement with the reinforcement strip 62 (see Fig. 9e).

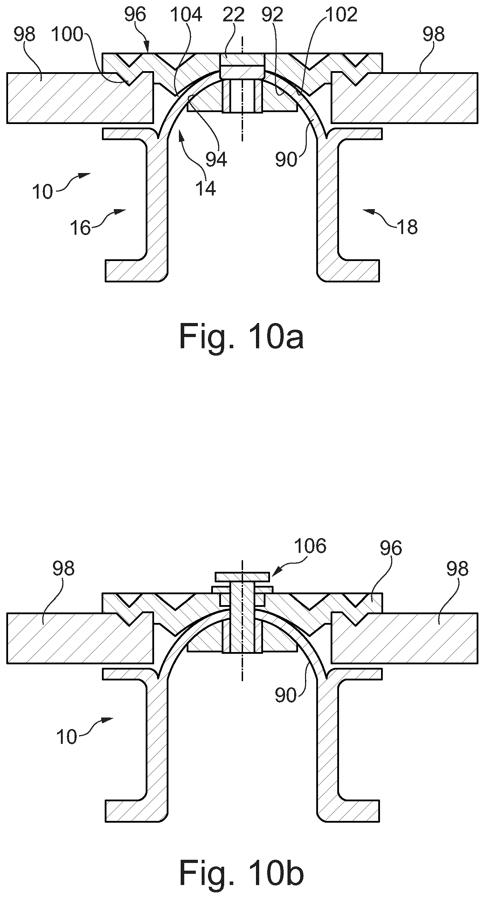

Fig. 10a shows another example of the mounting rail arrangement 10 in a cross-section. The support rail 12 has an upper web comprising a curved cross-section 90 at least in a center area providing a concave curved lower abutment contour 92 for the reinforcement arrangement. The reinforcement arrangement comprises a convex curved upper contour 94 for engagement with the concave curved lower abutment contour 92 of the support rail 12.

The curved cross-section provides a dome-like load supporting structure. Thus, an improved load transfer in Z-direction is provided.

In an option, the reinforcement arrangement 20 comprises a continuous nut profile, e.g. with an inch wise hole pattern matching with the inch wise hole pattern of the openings in the upper web.

As an option, a longitudinal cover plate 96 is provided clamping adjoining floor panels 98, which can also be referred to as floor plates. The cover plate 96 is connected to the mounting interfaces 22. The cover plate 96 comprises lateral clamping sections 100 protruding from its lower side for clamping engagement with the floor panels 98.

The term "cover plate" relates to a component that closes the upper web 14 and enables a smooth upper floor surface. The cover plate 96 also closes off the area below the cover and thus provides protection. The cover plate 96 further provides a holding function of the floor panels 98.

The term "clamping sections" relates to integrated parts of the cover that can act as clamping device for holding floor panels.

In an example, the cover plate 96 is made from stainless steel. As an option, sealing stripes can be arranged on its side facing the floor panel.

In an option, the clamping sections 100 comprise protrusions on their lower side for an engagement with an upper surface of the floor panels 98.

As an example, the protrusions are provided as a linear row of pins. As another example, the protrusions are provided as a row of pins.

In a further example, the protrusions are provided by embossing of the sheet-like cover plate material.

In an option, the cover plate 96 has a central lower contour that matches with an upper contour 104 of the upper web comprising the curved cross-section 90.

Fig. 10b shows an example of the mounting rail arrangement 10 of Fig. 10a with the mounting elements comprising seat mounting parts 106 that have an upper head section, which is extending upwards from above the support rail. The upper head section provides a single nose rail segment for connection of a seat leg.

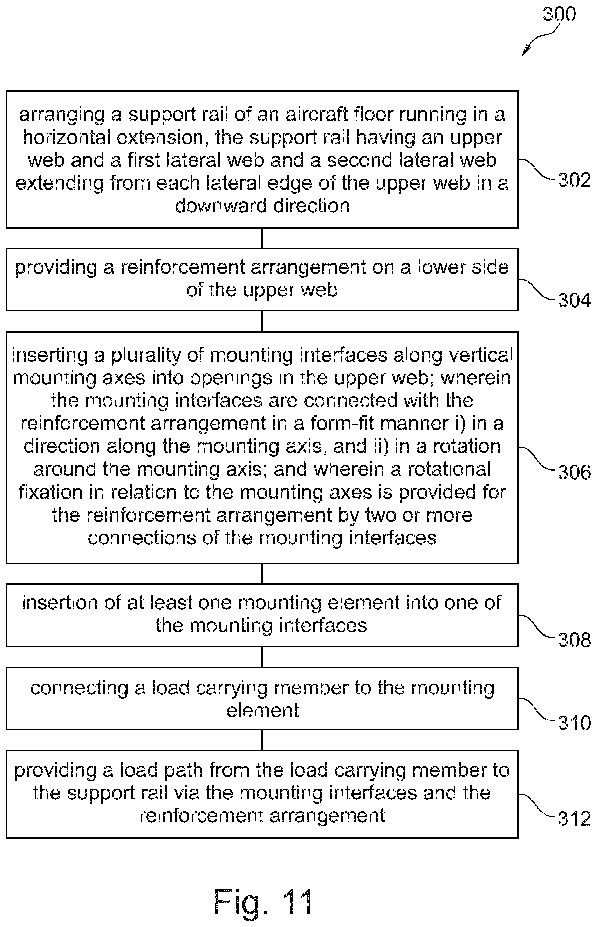

Fig. 11 shows basic steps of an example of a method 300 for load introduction into an aircraft cabin floor. The method 300 comprises the following steps:
- In a first step 302, a support rail of an aircraft floor is arranged running in a horizontal extension. The support rail has an upper web and a first lateral web and a second lateral web extending from each lateral edge of the upper web in a downward direction.
- In a second step 304, a reinforcement arrangement is provided on a lower side of the upper web.
- In a third step 306, a plurality of mounting interfaces is inserted along vertical mounting axes into openings in the upper web. The mounting interfaces are connected with the reinforcement arrangement in a form-fit manner i) in a direction along the mounting axis, and ii) in a rotation around the mounting axis; and a rotational fixation in relation to the mounting axes is provided for the reinforcement arrangement by two or more connections of the mounting interfaces.
- In a fourth step 308, at least one mounting element is inserted into one of the mounting interfaces.
- In a fifth step 310, a load carrying member is connected to the mounting element.
- In a sixth step 312, a load path is provided from the load carrying member to the support rail via the mounting interfaces and the reinforcement arrangement.

It has to be noted that embodiments of the invention are described with reference to different subject matters. In particular, some embodiments are described with reference to method type claims whereas other embodiments are described with reference to the device type claims. However, a person skilled in the art will gather from the description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A mounting rail arrangement (10) for an aircraft cabin floor, comprising:
- a support rail (12) for a horizontal extension, the support rail having an upper web (14) and a first lateral web (16) and a second lateral web (18) extending from each lateral edge of the upper web in a downward direction;
- a reinforcement arrangement (20) on a lower side of the upper web; and
- a plurality of mounting interfaces (22) inserted along vertical mounting axes (24) into openings (26) in the upper web; wherein the mounting interfaces are configured for an insertion of a mounting element (30);
wherein the mounting interfaces are connected with the reinforcement arrangement in a form-fit manner
i) in a direction along the mounting axis, and
ii) in a rotation around the mounting axis; and
wherein a rotational fixation in relation to the mounting axes is provided for the reinforcement arrangement by two or more connections of the mounting interfaces.

2. Mounting rail arrangement according to claim 1, wherein the reinforcement arrangement provides a load transfer area to the support rail which is larger than a load transfer surface of the mounting interfaces.

3. Mounting rail arrangement according to claim 1 or 2, wherein the reinforcement arrangement comprises a plurality of reinforcement plates (40) arranged along the lower side of the upper web; and
wherein, for the rotational fixation, adjacent reinforcement plates block each other in terms of rotation around the mounting axis by a form-fit connection.

4. Mounting rail arrangement according to claim 3, wherein the reinforcement plates have a polygonal outer shape with a plurality of abutment portions (46) to abut on adjacent abutment portions of an adjacent reinforcement plate.

5. Mounting rail arrangement according to one of the preceding claims, wherein the reinforcement arrangement comprises a reinforcement strip (62) arranged along the lower side of the upper web;
wherein the reinforcement strip comprises an engagement profile on its lower side and the mounting interfaces are configured to engage with the engagement profile; and
wherein the engagement profile comprises:
i) at least one linear toothlike protrusion (64); or
ii) a linear recess (66) along at least a part of the reinforcement strip.

6. Mounting rail arrangement according to one of the preceding claims, wherein a sealing arrangement (47) is provided between the mounting interfaces and the support rail.

7. Mounting rail arrangement according to one of the preceding claims, wherein the mounting interfaces comprise an upper section (48) for connection of a shear pin segment of a mounting element and a lower section (50) with a thread for an engagement of a threaded pin segment.

8. Mounting rail arrangement according to one of the preceding claims, wherein the upper web comprises a curved cross-section (90) at least in a center area providing a concave curved lower abutment contour for the reinforcement arrangement; and
wherein the reinforcement arrangement comprises a convex curved upper contour for engagement with the concave curved lower abutment contour of the support rail.

9. Mounting rail arrangement according to one of the preceding claims, wherein the support rail comprises upper resting surfaces (58) for mounting of floor panels.

10. Mounting rail arrangement according to one of the preceding claims, wherein a longitudinal cover plate (96) is arranged above the upper web;
wherein the cover plate is connected to the mounting interfaces; and
wherein the cover plate comprises lateral clamping sections (100) protruding from its lower side for clamping engagement with floor panels.

11. Mounting rail arrangement according to one of the preceding claims, wherein the mounting elements comprise seat mounting parts (106) that are mounted to the mounting interfaces and that have an upper head section, which is extending upwards from above the support rail; and
wherein the upper head section provides a single nose rail segment for connection of a seat leg.

12. Mounting rail arrangement according to one of the preceding claims, wherein the support rail is made at least partly from a fiber matrix composite material.

13. An aircraft cabin floor (200), comprising:
- a plurality of floor panels (202); and
- a plurality of mounting rails (204);
wherein at least a part of the plurality of the mounting rails is provided as the mounting rail arrangement (10) according to one of the preceding claims; and
wherein at least a part of the floor panels is attached the support rails of the mounting rail arrangements.

14. An aircraft (250), comprising:
- a fuselage structure (252) enclosing a fuselage volume; and
- an aircraft cabin floor (200) according to claim 13 arranged within the fuselage separating an upper cabin area from a lower cargo space in the fuselage volume;
wherein at least one of the group comprising passenger seat arrangements, monuments and lavatories is mounted to the mounting interfaces of the aircraft cabin floor.

15. A method (300) for load introduction into an aircraft cabin floor, comprising the following steps:
- arranging (302) a support rail of an aircraft floor running in a horizontal extension, the support rail having an upper web and a first lateral web and a second lateral web extending from each lateral edge of the upper web in a downward direction;
- providing (304) a reinforcement arrangement on a lower side of the upper web;
- inserting (306) a plurality of mounting interfaces along vertical mounting axes into openings in the upper web; wherein the mounting interfaces are connected with the reinforcement arrangement in a form-fit manner i) in a direction along the mounting axis, and ii) in a rotation around the mounting axis; and wherein a rotational fixation in relation to the mounting axes is provided for the reinforcement arrangement by two or more connections of the mounting interfaces;
- insertion (308) of at least one mounting element into one of the mounting interfaces;
- connecting (310) a load carrying member to the mounting element; and
- providing (312) a load path from the load carrying member to the support rail via the mounting interfaces and the reinforcement arrangement.
